# FASCICULE DE BREVET EUROPEEN

(11) **EP 3 433 116 B1**
(45) Date de publication et mention de la délivrance du brevet: **17.06.2020**
(21) Numéro de dépôt: 17712202.5
(22) Date de dépôt: 28.02.2017
(51) Int. Cl.: B60G 15/06, F16F 9/49, F16F 9/58

(54) **SYSTEME DE SUSPENSION HYDRAULIQUE D'UN VEHICULE**
HYDRAULISCHES AUFHÄNGUNGSSYSTEM FÜR EIN FAHRZEUG
HYDRAULIC SUSPENSION SYSTEM FOR A VEHICLE

(30) Priorité: 25.03.2016 FR 1652608; 25.03.2016 FR 1652609
(43) Date de publication de la demande: 30.01.2019
(73) Titulaire: PSA Automobiles SA, 78300 Poissy (FR)
(72) Inventeur: BERLINGER, Nicolas, 77720 Bombon (FR); GROULT, Antonin, 78740 Vaux sur Seine (FR); GUINGAND, Frederic, 91430 Igny (FR)
(86) Numéro de dépôt international: PCT/FR2017/050447
(87) Numéro de publication internationale: WO 2017/162947

(56) Documents cités:
- DE-A1-102004 039 702
- FR-A1- 2 820 180
- FR-A1- 2 995 048
- JP-A- S6 264 603
- US-A- 5 219 414

## Description

L'invention concerne un système de suspension hydraulique d'un véhicule, notamment automobile.

De manière connue en soi, un système de suspension hydraulique d'un véhicule, notamment automobile, comprend pour chacune des roues du véhicule un amortisseur à piston mobile dans son cylindre correspondant et interposé entre la caisse et le porte-fusée de roue du véhicule. Le rôle de cet amortisseur est de fortement limiter les oscillations transmises par les roues à la caisse du véhicule lorsque les roues rencontrent des aspérités ou des obstacles présents sur la route sur laquelle le véhicule circule.

De manière à limiter et amortir la course du piston de l'amortisseur, ce dernier comprend des butées d'attaque et éventuellement de détente mécaniques compressibles, ou éventuellement hydrauliques. Le rôle de ces butées est également de protéger le châssis du véhicule lors de l'apparition de forts débattements de la roue correspondante, dus à des incidents ou à des obstacles importants, comme par exemple les ralentisseurs du type dos-d'âne ou les nids de poule.

Il est notamment connu du document FR 2995048 une butée d'attaque hydraulique à piston mobile dans son cylindre correspondant, et dont le piston est destiné à être déplacé par le piston de l'amortisseur lorsque ce dernier approche de sa fin de course.

Cependant, comme les courses importantes du piston de l'amortisseur sont majoritairement de nature incidentelle, le confort de la suspension n'est pas une priorité au regard de la préservation de l'intégrité mécanique du véhicule. Pour cette raison, les butées d'attaque et de détente sont généralement très raides et génèrent des discontinuités d'efforts brutales. Le confort pour les occupants du véhicule en est alors fortement pénalisé dans ces situations.

On connait également du document JPS6264603, un système de suspension conforme au préambule de la revendication 1.

La présente invention a pour but de pallier les inconvénients ci-dessus de l'art antérieur.

Pour atteindre ce but, l'invention concerne un système de suspension hydraulique d'un véhicule, notamment automobile, conforme à la revendication 1.

D'autres caractéristiques sont énoncées dans les revendications dépendantes.

L'invention concerne également un véhicule, notamment automobile, comprenant un tel système de suspension hydraulique.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un art antérieur et deux modes de réalisation de l'invention et dans lesquels :

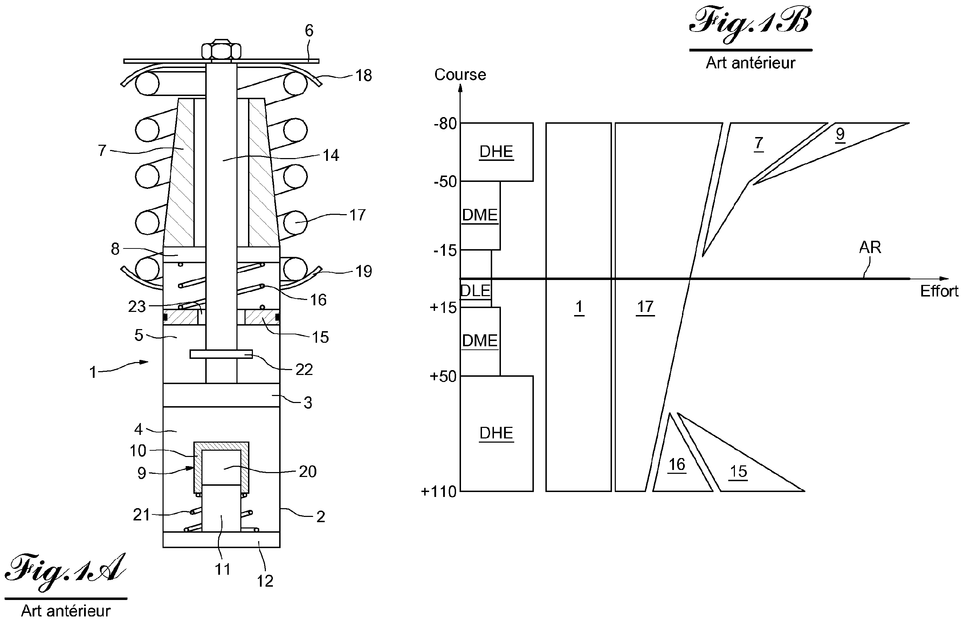

- Les figures 1A et 1B représentent un schéma en coupe longitudinale d'un amortisseur de l'art antérieur ainsi qu'un graphe illustrant l'agencement des éléments composant l'amortisseur en fonction de la course du piston de l'amortisseur dans le cylindre de l'amortisseur ;

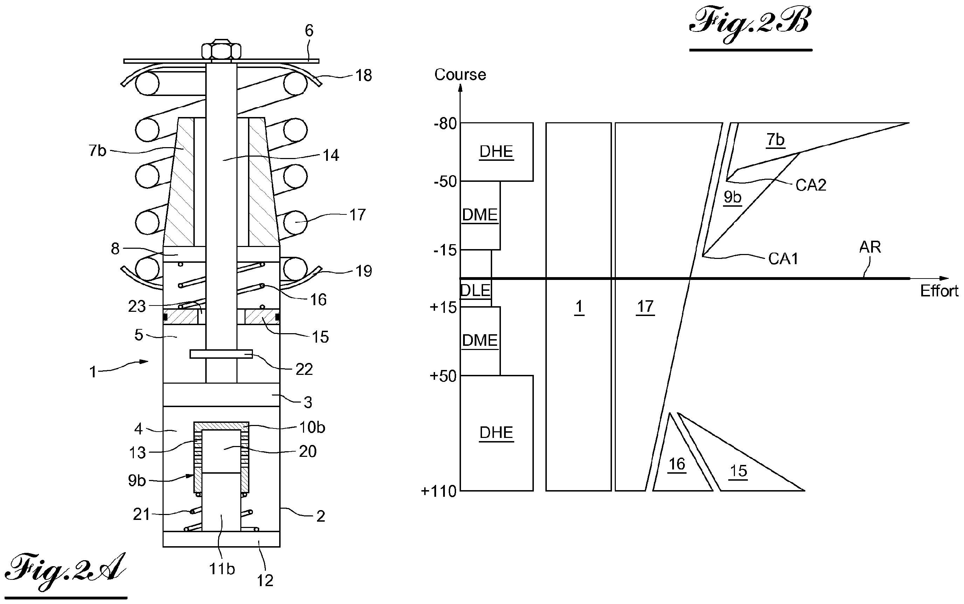

- Les figures 2A et 2B représentent un schéma en coupe longitudinale d'un amortisseur selon un premier mode de réalisation de l'invention lorsque le véhicule est à une assiette de référence ainsi qu'un graphe de l'agencement des éléments de l'amortisseur correspondant à la position du piston repéré à la figure 2A ;

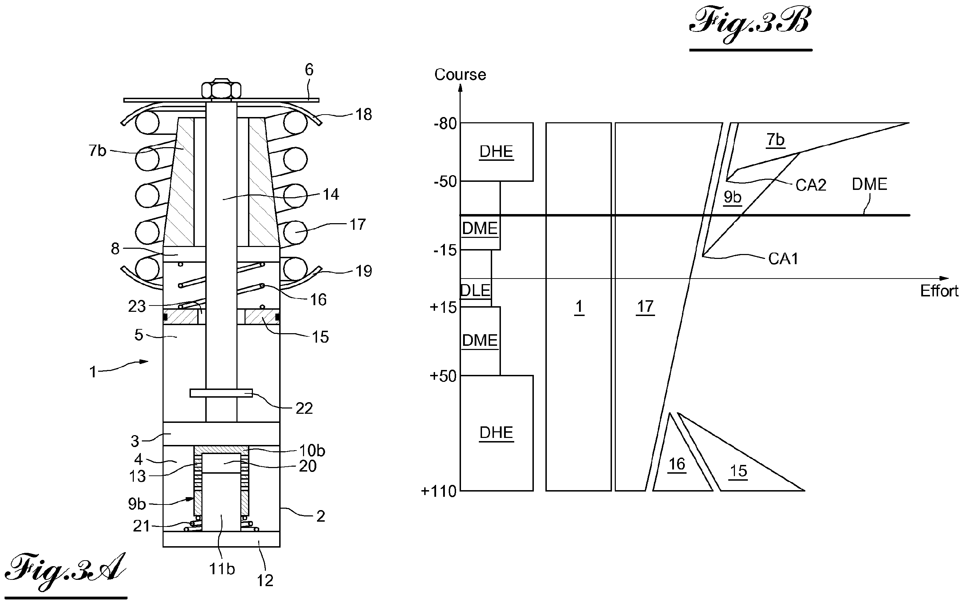

- Les figures 3A et 3B représentent un schéma en coupe longitudinale d'un amortisseur de l'art antérieur lorsque la course du piston de l'amortisseur dépasse une première course en attaque dans le cylindre de l'amortisseur ainsi qu'un graphe de l'agencement des éléments de l'amortisseur correspondant à la position du piston repéré à la figure 3A ;

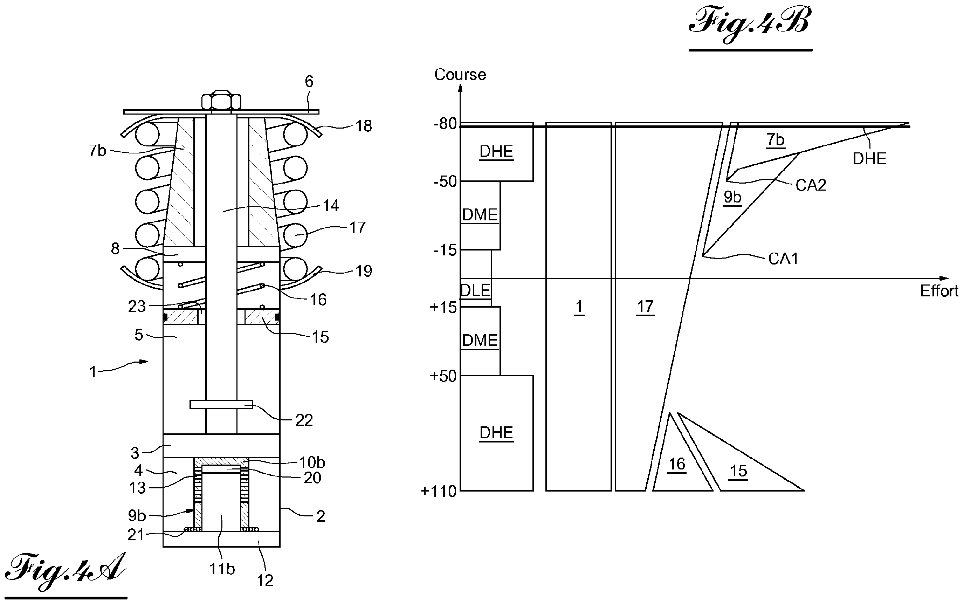

- Les figures 4A et 4B représentent un schéma en coupe longitudinale d'un amortisseur de l'art antérieur lorsque la course du piston de l'amortisseur dépasse une seconde course en attaque dans le cylindre de l'amortisseur ainsi qu'un graphe de l'agencement des éléments de l'amortisseur correspondant à la position du piston repéré à la figure 4A ;

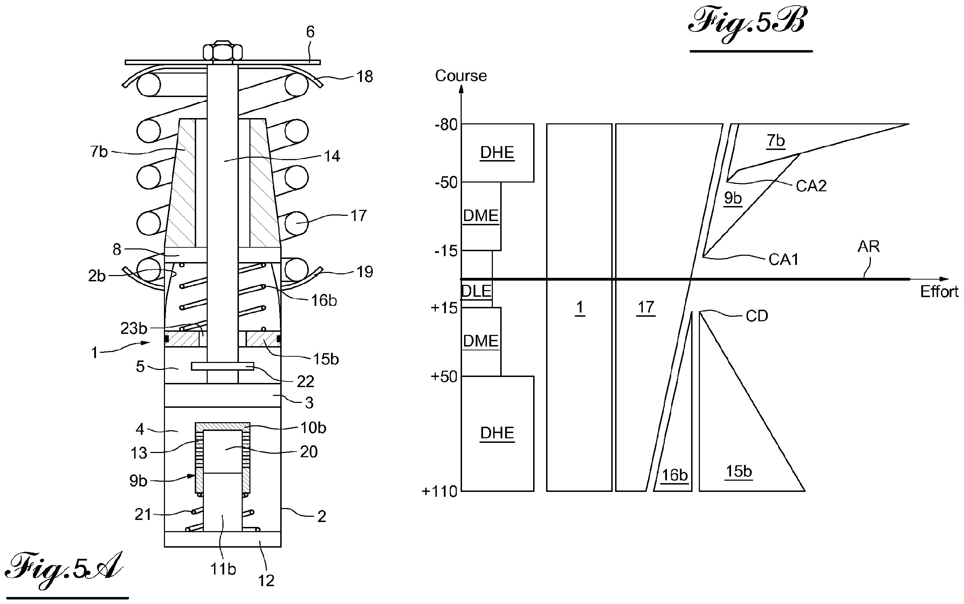

- Les figures 5A et 5B représentent un schéma en coupe longitudinale d'un amortisseur selon un mode de réalisation de l'invention lorsque le véhicule est à une assiette de référence ainsi qu'un graphe de l'agencement des éléments de l'amortisseur correspondant à la position du piston repéré à la figure 5A ;

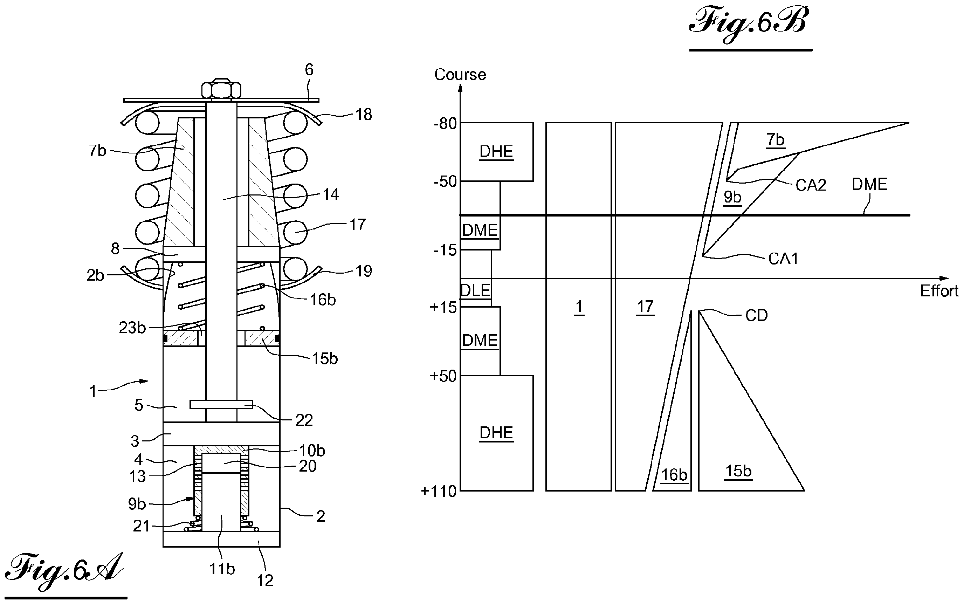

- Les figures 6A et 6B représentent un schéma en coupe longitudinale d'un amortisseur selon un mode de réalisation de l'invention lorsque la course du piston de l'amortisseur dépasse une première course en attaque dans le cylindre de l'amortisseur ainsi qu'un graphe de l'agencement des éléments de l'amortisseur correspondant à la position du piston repéré à la figure 6A ;

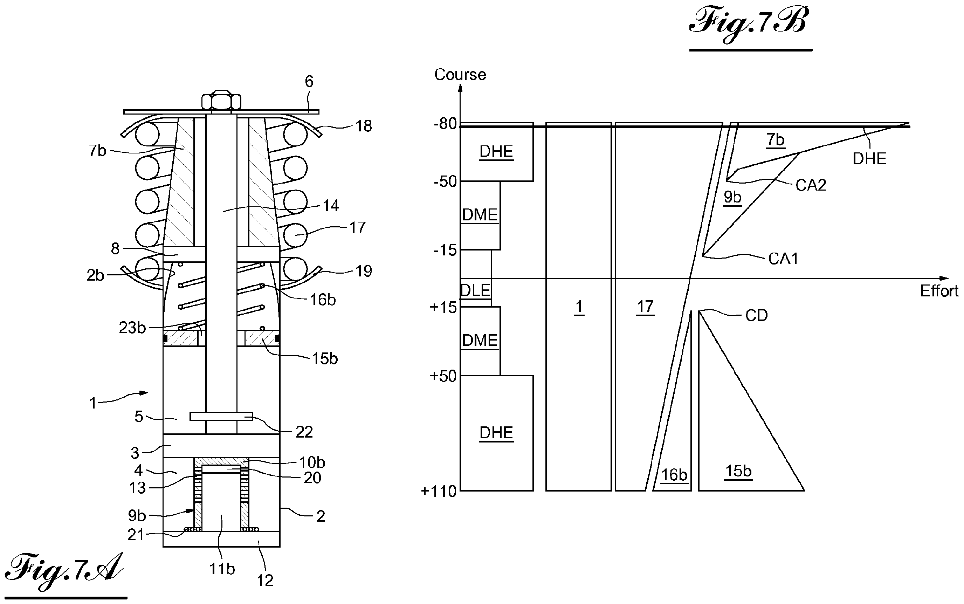

- Les figures 7A et 7B représentent un schéma en coupe longitudinale d'un amortisseur selon un mode de réalisation de l'invention lorsque la course du piston de l'amortisseur dépasse une seconde course en attaque dans le cylindre de l'amortisseur ainsi qu'un graphe de l'agencement des éléments de l'amortisseur correspondant à la position du piston repéré à la figure 7A ;

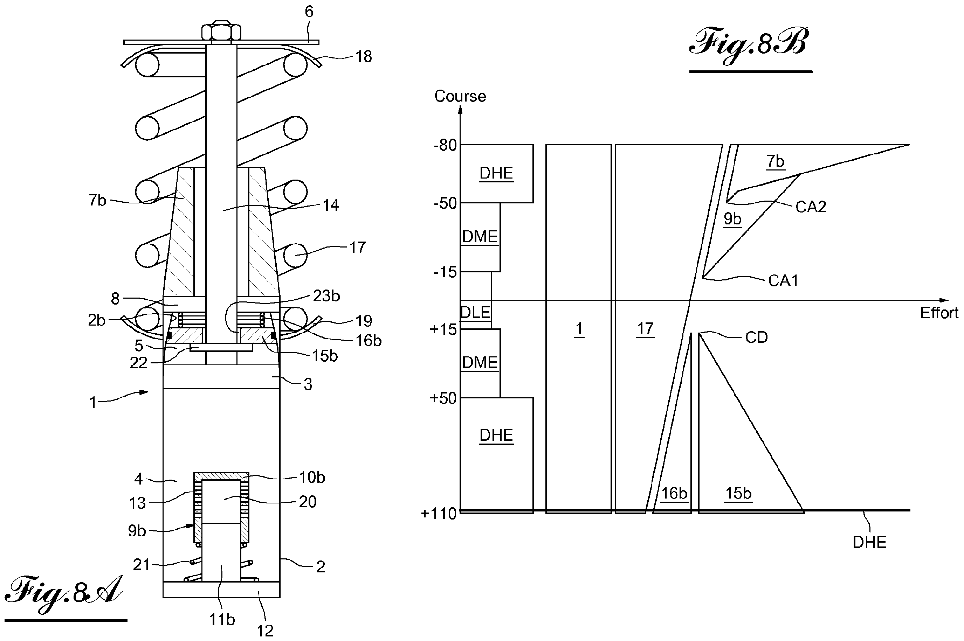

- Les figures 8A et 8B représentent un schéma en coupe longitudinale d'un amortisseur selon un mode de réalisation de l'invention lorsque la course du piston de l'amortisseur dépasse une troisième course en détente dans le cylindre de l'amortisseur ainsi qu'un graphe de l'agencement des éléments de l'amortisseur correspondant à la position du piston repéré à la figure 8A.

En référence à la figure 1A, un système de suspension hydraulique d'un véhicule, notamment automobile, va maintenant être décrit.

La suspension du véhicule comprend, pour chaque roue du véhicule, un amortisseur hydraulique 1 comprenant un corps 2 en forme de cylindre et un piston 3 mobile dans le cylindre 2. Cet amortisseur 1 est interposé entre la caisse 6 du véhicule et le porte-fusée de roue correspondant. Le piston 3, solidaire d'une première extrémité d'une tige 14 dont l'autre extrémité est reliée à la caisse 6 du véhicule, délimite dans le cylindre 2 deux chambres 4, 5 respectivement de compression et de détente dans lesquelles du fluide hydraulique incompressible (huile) compris dans le cylindre 2 est destiné à circuler de part et d'autre du piston 3 au gré des mouvements de ce dernier dans le cylindre 2.

Le comportement de chaque amortisseur hydraulique 1 du système de suspension hydraulique du véhicule peut être décrit selon une loi d'amortissement dans laquelle l'effort exercé par l'amortisseur 1 dépend de la vitesse de débattement de la roue correspondante. Autrement dit, plus le piston 3 se déplace rapidement dans le cylindre 2 de l'amortisseur, plus l'effort exercé par l'amortisseur 1 sur la caisse 6 du véhicule est important.

Le système de suspension hydraulique comprend également, pour chaque roue du véhicule, un ressort de suspension 17 monté autour de l'amortisseur 1 et dont les extrémités sont en appui respectivement contre la caisse 6 du véhicule par l'intermédiaire d'une coupelle 18 et contre une coupelle 19 solidaire du cylindre 2 de l'amortisseur. Le ressort de suspension 17 est un élément de raideur dont le comportement peut être décrit par une loi selon laquelle l'effort exercé par le ressort 17 sur la caisse 6 du véhicule dépend de l'amplitude du débattement de la roue correspondante. Autrement dit, plus le ressort de suspension 17 est comprimé, plus l'effort exercé sur la caisse 6 du véhicule est important. Le ressort de suspension 17 permet essentiellement de porter la caisse 6 du véhicule tout en autorisant les débattements.

Le système de suspension comprend également pour chaque roue du véhicule deux butées d'attaque respectivement mécanique 7 et hydraulique 9, ainsi que deux butées de détente respectivement mécanique 16 et hydraulique 15.

Chaque butée mécanique 7, 16 est assimilable à une raideur, et exerce donc un effort sur la caisse 6 en fonction du débattement de la roue correspondante. De la même manière que le ressort de suspension 17, l'effort exercé sur la caisse 6 du véhicule par les butées mécaniques respectivement d'attaque 7 et de détente 16 est d'autant plus grand que le débattement en attaque et en détente de la roue correspondante est important.

Chaque butée hydraulique d'attaque 9 et de détente 15 est quant à elle assimilable à un amortisseur et exerce donc un effort sur la caisse 6 du véhicule en fonction de la vitesse du débattement de la roue correspondante. De la même manière que l'amortisseur hydraulique 1, l'effort exercé sur la caisse 6 du véhicule par les butées hydraulique respectivement d'attaque 9 et de détente 15 est d'autant plus grand que la vitesse du débattement de la roue correspondante est importante.

En référence à la figure 1A, la butée d'attaque mécanique 7 est solidaire d'une extrémité du cylindre 2 de l'amortisseur et positionnée entre le cylindre 2 de l'amortisseur et la caisse 6 du véhicule. Elle présente en outre une section transversale annulaire de manière à être traversée par la tige 14 du piston 3 de l'amortisseur 1. Ainsi, quand le piston 3 dépasse une certaine course en attaque, la butée d'attaque mécanique 7 est comprimée entre l'extrémité du cylindre 2 de l'amortisseur 1 et la caisse 6 du véhicule de manière à fortement freiner la course du piston 3 dans le cylindre 2 de l'amortisseur.

De préférence, la butée d'attaque mécanique 7 est en matériau élastomère présentant une très forte constante de raideur, de sorte que l'effort exercé par la butée d'attaque mécanique 7 sur la caisse 6 du véhicule augmente très rapidement avec le débattement en attaque de la roue.

La butée d'attaque hydraulique 9 est montée dans la chambre de compression 4 du cylindre 2 de l'amortisseur 1. La butée d'attaque hydraulique 9 comprend un piston 11 solidaire de la paroi inférieure de fond 12 du cylindre 2 de l'amortisseur, et un cylindre 10 destiné à être déplacé le long du piston 11 de la butée d'attaque 9 par le piston 3 de l'amortisseur 1 quand celui-ci arrive au voisinage de la fin de course en attaque. Le cylindre 10 de la butée hydraulique 7 forme une chambre de compression 20 remplie du fluide hydraulique, qui est susceptible de s'échapper de cette chambre 20 par des fuites autour du piston 11 de butée d'attaque hydraulique 9 lorsque le piston 3 de l'amortisseur déplace le cylindre 10 de la butée d'attaque hydraulique 9 en direction de la paroi inférieure de fond 12 de l'amortisseur. Ainsi, le piston 3 de l'amortisseur 1 arrivant au voisinage de sa fin de course en attaque est très rapidement freiné.

En outre, la butée d'attaque hydraulique 9 comprend un ressort de rappel 21 entourant le piston 11 de la butée hydraulique 9 et dont les extrémités sont en appui contre respectivement la paroi inférieure de fond 12 du cylindre 2 de l'amortisseur et le bord annulaire d'extrémité bordant l'orifice du cylindre 10 de la butée hydraulique 9. De la sorte, le ressort de rappel 21 permet au cylindre 10 de la butée d'attaque hydraulique 9 de revenir à la position de repos lorsque le piston 3 de l'amortisseur 1 s'éloigne du cylindre 10 de la butée hydraulique 9.

La butée de détente hydraulique 15 est quant à elle un piston flottant entourant la tige 14 de l'amortisseur 1 de manière à conserver un espace annulaire 23 entre la tige 14 et le bord interne du piston flottant au travers duquel le fluide hydraulique est susceptible de circuler. La butée de détente hydraulique 15 est positionnée dans la chambre de détente 5 du cylindre 2 de l'amortisseur, entre la paroi d'extrémité supérieure 8 du cylindre 2 de l'amortisseur traversée par la tige 14 de l'amortisseur et une collerette 22 formant clapet solidaire de la tige 14 de l'amortisseur. La butée de détente mécanique 16 est quant à elle un ressort à forte raideur positionné dans la chambre de détente 5 et dont les extrémités sont en appui respectivement contre le piston flottant 15 et la paroi d'extrémité supérieure 8 du cylindre 2 de l'amortisseur 1.

Lorsque le piston 3 de l'amortisseur hydraulique 1 se déplace au voisinage de sa fin de course en détente, la collerette 22 formant clapet déplace le piston flottant 15 en direction de la paroi d'extrémité supérieure 8 du cylindre 2 de l'amortisseur 1. Le piston flottant 15 se déplaçant comprime alors simultanément la butée de détente mécanique 16. En outre, la collerette 22 formant clapet, en entrant en contact avec le piston flottant 15, obture l'espace 23 entre le bord interne du piston flottant 15 et la tige 14 augmentant ainsi la résistance de la butée de détente hydraulique au déplacement vers la paroi d'extrémité supérieure 8 du cylindre 2 de l'amortisseur 1. Ainsi, le piston 3 de l'amortisseur hydraulique 1 arrivant au voisinage de sa fin de course est très rapidement freiné par les deux butées de détente 15, 16.

En référence au graphe de la figure 1B, l'agencement des butées d'attaque 7, 9 et de détente 15, 16 en fonction de la course du piston 3 de l'amortisseur 1 dans le cylindre 2 de l'amortisseur 1 va être décrit.

L'échelle verticale représente la course en millimètres du piston 3 de l'amortisseur dans le cylindre 2 de l'amortisseur 1 lors des débattements de la roue du véhicule. L'échelle horizontale est une échelle visuelle représentant l'effort exercé par chaque élément de la suspension hydraulique au niveau d'une roue en fonction de la course du piston 3 dans le cylindre 2 de l'amortisseur 1 correspondant. La course nulle (zéro millimètres) correspond à la position du piston 3 de l'amortisseur 1 dans le cylindre lorsque la suspension du véhicule ne subit d'autre effort que celui exercé par la masse du véhicule. Le véhicule se trouve alors à l'assiette de référence AR.

Les courses négatives du piston 3 de l'amortisseur dans le cylindre 2 correspondent à des débattements en attaque de la roue, c'est-à-dire que la suspension a tendance à se comprimer et la caisse 6 du véhicule à se rapprocher de la route par rapport à l'assiette de référence AR. A l'inverse, les courses positives du piston 3 de l'amortisseur 1 dans le cylindre 2 correspondent à des débattements en détente de la roue, c'est-à-dire que la suspension a tendance à se détendre et la caisse 6 du véhicule à s'éloigner de la route par rapport à l'assiette de référence AR.

Pour simplifier, dans la suite de la description, on considère que les débattements de roue correspondent aux courses du piston 3 dans l'amortisseur correspondant. Dans le cas où l'amortisseur 1 est incliné par rapport à une direction verticale, les débattements de roue sont plus grands que les courses du piston 3 de l'amortisseur 1 correspondant. Bien entendu, les débattements de roue sont proportionnels aux courses du piston 3 de l'amortisseur 1 correspondant.

On considère que des débattements de roue en attaque ou en détente, correspondant aux courses en attaque ou en détente de piston 3 de l'amortisseur 1, compris entre -15 mm et 15 mm à partir de l'assiette de référence AR correspondent à des débattements de faible énergie DLE qui représentent les sollicitations les plus fréquentes, rencontrées sur les routes de bonne qualité.

On considère que des débattements de roue en attaque ou en détente, correspondant aux courses en attaque de piston 3 de l'amortisseur 1 compris entre - 15 mm et -50 mm à partir de l'assiette de référence AR, et des débattements de roue en attaque ou en détente, correspondant aux courses en détente de piston 3 de l'amortisseur 1 compris entre 15 mm et 50 mm à partir de l'assiette de référence AR correspondent à des débattements de moyenne énergie DME qui représentent des sollicitations également fréquentes. Ces sollicitations sont rencontrées sur les routes légèrement dégradées, où lorsque les roues franchissent des petits obstacles, comme par exemple des petits ralentisseurs.

Enfin, on considère que des débattements de roue en attaque ou en détente, correspondant aux courses en attaque de piston 3 de l'amortisseur 1 au-delà de -50 mm à partir de l'assiette de référence AR, et des débattements de roue en attaque ou en détente, correspondant aux courses en détente de piston 3 de l'amortisseur 1, supérieurs à 50 mm à partir de l'assiette de référence AR correspondent à des débattements de forte énergie DHE qui représentent des sollicitations peu fréquentes. Ces sollicitations se rencontrent notamment quand les roues franchissent un obstacle important de type ralentisseur en dos-d'âne, ou un nid de poule relativement profond.

Pour plus de commodités dans la suite de la description, nous parlerons des courses en attaque ou en détente du piston 3 de l'amortisseur 1 en valeur absolue.

En se référant au graphe de la figure 1B, la butée d'attaque mécanique 7 est comprimée dès que la course du piston 3 de l'amortisseur 1 dépasse une course en attaque d'environ 10 mm. Ainsi, la butée d'attaque mécanique 7 intervient rapidement pour freiner la course du piston 3 de l'amortisseur 1 dès les débattements de moyenne énergie DME. Au-delà d'une course en attaque du piston 3 de l'amortisseur 1 de 50 mm, c'est-à-dire pour des débattements de forte énergie DHE, le piston 3 de l'amortisseur hydraulique 1 provoque le déplacement du cylindre 10 de la butée d'attaque hydraulique 9 autour de son piston correspondant 11, pour rapidement freiner le piston 3 de l'amortisseur 1 dans son cylindre 2 correspondant et mieux protéger la caisse 6 du véhicule.

En se référant à nouveau au graphe de la figure 1B, le piston flottant 15 de la butée de détente hydraulique est déplacé et comprime simultanément le ressort constituant la butée de détente mécanique 16 lorsque la course en détente du piston 3 de l'amortisseur 1 dépasse une valeur d'environ 70 mm, pour rapidement freiner le piston 3 de l'amortisseur 1 dans son cylindre correspondant 2.

Ces valeurs de courses en attaque et en détente du piston 3 de l'amortisseur 1 sont bien entendu revues à la baisse si l'amortisseur 1 est incliné par rapport à une direction verticale.

En référence aux figures 2A, 2B, 3A, 3B, 4A et 4B, le système de suspension selon l'art antérieur qui va maintenant être décrit.

Il comprend pour chaque roue du véhicule un amortisseur 1, un ressort de suspension 17 et deux butées de détente respectivement mécanique 16 et hydraulique 15 tels que décrits précédemment.

Le système de suspension hydraulique selon le premier mode de réalisation de l'invention comprend également pour chaque roue du véhicule une butée d'attaque mécanique 7b moins longue que la butée d'attaque mécanique 7 de l'art antérieur, ainsi qu'une butée d'attaque hydraulique 9b dont le cylindre 10b présente une amplitude de déplacement autour du piston correspondant 11b entre sa fin de course en attaque et sa fin de course en détente comprise par exemple entre 40 et 60 mm. Cette amplitude de déplacement est plus grande que l'amplitude de déplacement du cylindre 10 de la butée d'attaque hydraulique 9 de l'art antérieur, qui est de l'ordre de 30 mm.

En outre, la structure du cylindre 10b de la butée d'attaque hydraulique 9b est différente, puisque le cylindre 10b comprend dans sa paroi une pluralité de trous radiaux traversants 13, et permettant l'entrée ou la sortie du fluide hydraulique de la chambre de compression 4 du cylindre 2 de l'amortisseur 1 lorsque le piston 11b et le cylindre 10b de la butée d'attaque hydraulique 9b se déplacent l'un par rapport à l'autre. Ainsi, à mesure que le cylindre 10b de la butée d'attaque hydraulique 9b se déplace autour du piston correspondant 11b vers la paroi inférieure de fond 12 du cylindre 2 de l'amortisseur 1, un nombre croissant de trous traversants 13 sont bouchés par le piston 11b de la butée d'attaque hydraulique 9b, diminuant ainsi la section globale des trous traversants 13 de sorte que l'effort exercé par la butée d'attaque hydraulique 9b sur la caisse 6 du véhicule augmente pour une vitesse de déplacement du cylindre 10b constante et en fonction de la course en attaque du piston 3 dans le cylindre 2 de l'amortisseur 1.

L'agencement des butées d'attaque mécanique 7b et hydraulique 9b en fonction des courses du piston 3 de l'amortisseur 1 est également différent par rapport à celui de l'art antérieur.

En effet, lorsque le piston 3 de l'amortisseur hydraulique 1 dépasse une course en attaque CA1 comprise entre 0 et 20 mm, préférentiellement 10 mm, ce dernier entraine le déplacement du cylindre 10b de la butée d'attaque hydraulique 9b autour de son piston correspondant 11b. Pour des débattements de faible et moyenne énergies, la section globale d'un grand nombre des trous 13 traversant le cylindre 10b de la butée d'attaque hydraulique 9b est suffisamment élevée pour assurer un freinage doux du piston 3 de l'amortisseur 1. Pour des débattements de plus forte énergie DHE au cours desquels le piston 3 d'amortisseur 1 se rapproche de sa fin de course en attaque, la section globale d'un moins grand nombre des trous 13 traversant le cylindre 10b de la butée d'attaque hydraulique 9b diminue car un nombre croissant de trous traversants 13 sont bouchés par le piston 11b de la butée d'attaque hydraulique 9b à mesure que le cylindre 10b se déplace autour du piston 11b de la butée d'attaque hydraulique 9b en direction de la paroi inférieure de fond 12 du cylindre 2 de l'amortisseur 1 : cela assure un freinage plus brusque du piston 3 de l'amortisseur 1 dans le but de protéger la caisse 6 et le châssis du véhicule.

En outre, dès que le piston 3 de l'amortisseur 1 dépasse une course en attaque CA2 comprise entre 30 et 50 mm, préférentiellement entre 40 et 50 mm, la butée d'attaque mécanique 7b est comprimée et participe au renforcement du freinage du piston 3 de l'amortisseur 1.

Le confort de la suspension est significativement amélioré par le système de suspension hydraulique du premier mode de réalisation de l'invention. En effet, la discontinuité de l'effort exercé par le système de suspension, et génératrice d'inconfort pour les passagers du véhicule, est fortement diminuée grâce à la butée d'attaque hydraulique 9b, dont le cylindre 10b a une amplitude de déplacement allongée, qui agit avant la butée d'attaque mécanique 7b. En outre, l'effort exercé par la butée d'attaque hydraulique 9b dépendant à la fois de la vitesse et de l'amplitude de déplacement du piston 3 de l'amortisseur 1 dans son cylindre 2, le freinage du piston 3 de l'amortisseur est adapté à l'amplitude et à la vitesse de sa course dans le cylindre 2, ce qui a également un effet positif sur le confort des passagers. Enfin, la butée d'attaque hydraulique 9b dissipe l'énergie sans l'accumuler, évitant de fait tout effet de relance lors des débattements de faible et moyenne énergies.

En référence aux figures 5A, 5B, 6A, 6B, 7A, 7B, 8A et 8B, le système de suspension selon un mode de réalisation de l'invention va maintenant être décrit.

Les éléments qui portent sur ces figures les mêmes références que sur les figures 2A, 2B, 3A, 3B, 4A et 4B sont identiques à ceux-ci et ne sont donc pas décrits à nouveau ici.

Le système de suspension hydraulique selon un mode de réalisation de l'invention comprend également pour chaque roue du véhicule une butée de détente mécanique 16b plus longue que la butée de détente mécanique 16 de l'art antérieur. Par conséquent, le piston flottant de la butée de détente hydraulique 15b selon l'invention présente une amplitude de déplacement autour de la tige 14 de l'amortisseur 1, entre sa position de repos et sa position de fin de course en détente, comprise entre par exemple entre 40 et 80 mm. Cette amplitude de déplacement est plus grande que l'amplitude de déplacement du piston flottant de la butée de détente hydraulique 15 de l'art antérieur, qui est de l'ordre de 20 à 30 mm. En outre, l'allongement de l'amplitude de déplacement de la butée de détente hydraulique 15b permet de diminuer la raideur du ressort de la butée de détente mécanique 16b, de sorte qu'il contribue peu au freinage du piston 3 de l'amortisseur 1 en détente. De plus, le piston flottant 15b de la butée de détente hydraulique est formé par une bague annulaire fendue radialement sur toute son épaisseur et destiné à coulisser le long de la tige 14 de l'amortisseur 1 de manière à conserver un espace annulaire 23b entre la tige 14 et le bord interne du piston flottant 15b, tandis que la partie supérieure de la chambre de détente 5 du cylindre 2 de l'amortisseur 1 comprend une paroi 2b de forme sensiblement tronconique dont la section transversale diminue en direction supérieure vers la paroi 8 de l'amortisseur 1. Ainsi, l'effort exercé par les butées de détente 15b, 16b sur la caisse du véhicule augmente de manière très progressive avec la course du piston flottant 15b : à mesure que le piston flottant 15b se déplace vers la paroi d'extrémité supérieure 8 du cylindre 2 de l'amortisseur 1 le long de la paroi tronconique 2b, la fente et l'espace annulaire 23b du piston flottant 15b se referme progressivement, diminuant de fait la section de passage du fluide hydraulique. Cela assure donc un amortissement variable en fonction de la course du piston flottant 15b, améliorant significativement la maîtrise des mouvements verticaux de la caisse du véhicule, et de fait le confort du véhicule.

L'agencement des butées de détente mécanique 16b et hydraulique 15b en fonction des courses du piston 3 de l'amortisseur 1 est également différent par rapport à celui de l'art antérieur.

En effet, lorsque le piston 3 de l'amortisseur hydraulique 1 dépasse une course en détente CD comprise entre 10 et 50 mm, préférentiellement 20 mm, la collerette 22 déplace le piston flottant 15b en direction de la paroi d'extrémité supérieure 8 du cylindre 2 de l'amortisseur 1. Le piston flottant 15b se déplaçant comprime alors simultanément la butée de détente mécanique 16b. Ainsi, dès que le piston 3 de l'amortisseur hydraulique 1 dépasse la course en détente CD, ce dernier est progressivement freiné par les deux butées de détente 15b, 16b.

Le confort de la suspension est significativement amélioré par le système de suspension hydraulique du mode de réalisation de l'invention. En effet, non seulement il possède les mêmes avantages que les suspensions connues mais en outre, l'utilisation combinée d'une butée de détente hydraulique 15b dont le piston flottant a une amplitude de déplacement plus importante et d'une butée de détente mécanique 16b dont le ressort a une raideur relativement faible permet une augmentation progressive du freinage du piston 3 de l'amortisseur 1 lors des débattements en détente de la roue du véhicule correspondante, améliorant significativement la maîtrise des mouvements verticaux de la caisse 6 du véhicule. Enfin, en virage, le côté extérieur du véhicule présente des éléments de la suspension se déplaçant en attaque et le côté intérieur du véhicule présente des éléments de suspension en détente. L'utilisation combinée des butées d'attaque et de détente selon un mode de réalisation de l'invention augmente le niveau d'amortissement en fonction de l'amplitude du roulis du véhicule, ce qui améliore la stabilité de ce dernier dans les virages.

La configuration telle que décrite n'est pas limitée aux modes de réalisation décrits précédemment et représentés sur les figures 2A, 2B, 3A, 3B, 4A, 4B, 5A, 5B, 6A, 6B, 7A, 7B, 8A, 8B. Elle n'a été donnée qu'à titre d'exemple non limitatif. De multiples modifications peuvent être apportées sans pour autant sortir du cadre de l'invention. En particulier, l'invention n'est pas limitée à une seule configuration de butée d'attaque hydraulique 9b. On pourrait par exemple imaginer une butée d'attaque hydraulique 9b dont le cylindre 10b est solidaire des parois internes de la chambre de compression 4 de l'amortisseur 1 et dont le piston 11b est destiné à être déplacé dans son cylindre correspondant 10b par le piston 3 de l'amortisseur 1. Bien entendu, tout type de butée d'attaque hydraulique 9b connue et apte à être logée dans la chambre de compression 4 d'un amortisseur 1 pourra être envisagée. On pourrait également imaginer pour chaque roue du véhicule un ressort de suspension 17 déporté à l'extérieur de l'amortisseur hydraulique 1, monté en parallèle avec l'amortisseur hydraulique 1 entre le porte-fusée de roue et la caisse 6 du véhicule. Enfin, on pourrait envisager qu'au niveau du train arrière du véhicule, les butées d'attaque mécanique 7b soient déportées et chacune interposée entre le porte-fusée de la roue correspondante et la caisse 6 du véhicule. L' objet de l'invention est décrit dans les revendications.

## Revendications

1. Système de suspension hydraulique d'un véhicule, notamment automobile, comprenant pour chaque roue du véhicule un amortisseur (1) à cylindre (2) et piston (3) mobile dans le cylindre pour y délimiter deux chambres (5, 4) respectivement de détente et de compression et interposé entre la caisse (6) et le porte-fusée de roue du véhicule, une butée d'attaque hydraulique (9b) montée dans la chambre de compression (4) et comportant un cylindre (10b) et un piston (11b) mobiles l'un par rapport à l'autre, **caractérisé en ce qu'**il comprend, pour chaque roue, une butée de détente mécanique compressible (16b) et une butée de détente hydraulique (15b) à piston montées dans la chambre de détente (5), **en ce qu'**il comprend, pour chaque roue, une butée d'attaque mécanique compressible (7b) positionnée entre le cylindre (2) et la caisse (6) du véhicule ou entre le porte-fusée de roue et la caisse (6) du véhicule, **en ce que** le piston (11b) et le cylindre (10b) de la butée hydraulique (9b) sont destinés à être déplacés l'un par rapport à l'autre par l'intermédiaire du piston (3) de l'amortisseur (1) lorsque ce dernier atteint une première course en attaque (CA1) dans le cylindre (2) de l'amortisseur (1), et **en ce que** la butée d'attaque mécanique (7b) est destinée à être comprimée entre le cylindre (2) de l'amortisseur et la caisse (6) du véhicule ou entre le porte-fusée de roue et la caisse (6) du véhicule lorsque le piston (3) de l'amortisseur atteint une seconde course en attaque (CA2) dans le cylindre de l'amortisseur supérieure à la première course (CA1), et **en ce que** le piston de la butée de détente hydraulique (15b) est destiné à être déplacé dans le cylindre correspondant (2) par le piston (3) de l'amortisseur (1) en même temps que la butée de détente mécanique (16b) est comprimée par le piston (3) de l'amortisseur lorsque ce dernier atteint une troisième course en détente (CD) dans le cylindre (2) de l'amortisseur (1).

2. Système de suspension selon la revendication 1, **caractérisé en ce que** la première course en attaque (CA1) du piston (3) de l'amortisseur (1) est comprise entre zéro et vingt millimètres à partir d'une assiette de référence (AR) du véhicule.

3. Système de suspension selon la revendication 1 ou 2, **caractérisé en ce que** la seconde course en attaque (CA2) du piston (3) de l'amortisseur (1) est comprise entre quarante et cinquante millimètres à partir de l'assiette de référence (AR) du véhicule.

4. Système de suspension selon l'une quelconque des revendications 1 à 3, **caractérisé en ce que** le cylindre (10b) de la butée hydraulique (9b) est solidaire de la paroi interne du cylindre (2) de l'amortisseur (1) et **en ce que** le piston (11b) de la butée d'attaque hydraulique (9b) est destiné à être déplacé dans son cylindre correspondant (10b) par le piston (3) de l'amortisseur lorsque ce dernier atteint la première course en attaque (CA1) dans le cylindre (2) de l'amortisseur.

5. Système de suspension selon l'une quelconque des revendications 1 à 3, **caractérisé en ce que** le piston (11b) de la butée hydraulique (9b) est solidaire de la paroi de fond (12) du cylindre (2) de l'amortisseur et **en ce que** le cylindre (10b) de la butée d'attaque hydraulique (9b) est destiné à être déplacé le long du piston (11b) de la butée hydraulique (9b) par le piston (3) de l'amortisseur lorsque ce dernier atteint la première course en attaque (CA1) dans le cylindre (2) de l'amortisseur (1).

6. Système de suspension selon l'une quelconque des revendications 1 à 3, **caractérisé en ce que** le cylindre (10b) de la butée hydraulique (9b) comprend une pluralité de trous radiaux (13) traversant la paroi du cylindre (10b) et permettant l'entrée ou la sortie du liquide de la chambre de compression du cylindre (10b) de l'amortisseur (1) lorsque le piston (11b) et le cylindre (10b) de la butée d'attaque hydraulique (9b) se déplacent l'un par rapport à l'autre.

7. Système de suspension selon l'une quelconque des revendications 1 à 3, **caractérisé en ce que** la butée d'attaque mécanique (7b) est solidaire d'une extrémité (8) du cylindre (2) de l'amortisseur (1) et est en matériau élastomère, et **en ce qu'**elle présente une section transversale annulaire de manière à être traversée par la tige (14) du piston de l'amortisseur (1) reliée à la caisse (6) du véhicule.

8. Système de suspension selon l'une quelconque des revendications 1 à 3, 6 et 7, **caractérisé en ce qu'**il comprend pour chaque roue du véhicule un ressort de suspension (17) monté autour de l'amortisseur (1).

9. Système de suspension selon l'une des revendications 1 à 9, **caractérisé en ce que** la troisième course en détente (CD) du piston (3) de l'amortisseur (1) est comprise entre dix et vingt millimètres à partir de l'assiette de référence (AR) du véhicule.

10. Système de suspension selon l'une des revendication 1 à 9, **caractérisé en ce que** la butée de détente hydraulique est un piston flottant (15b) entourant la tige (14) de l'amortisseur (1) et positionnée dans la chambre de détente (5) du cylindre (2) de l'amortisseur entre la paroi d'extrémité supérieure (8) du cylindre (2) de l'amortisseur traversée par la tige (14) de l'amortisseur et une collerette (22) solidaire de la tige (14) de l'amortisseur.

11. Système de suspension selon la revendication 10, **caractérisé en ce que** la butée de détente mécanique (16b) est un ressort de rappel positionné dans la chambre de détente (5) et dont les extrémités sont en appui respectivement contre le piston flottant (15b) et la paroi d'extrémité supérieure (8) du cylindre (2) de l'amortisseur.

12. Véhicule, notamment automobile, comprenant un système de suspension hydraulique selon l'une quelconque des revendications 1 à 11.

## Patentansprüche

1. Hydraulisches Aufhängungssystem eines Fahrzeugs, insbesondere eines Automobils, umfassend für jedes Rad des Fahrzeugs einen Stoßdämpfer (1) mit einem Zylinder (2) und einem Kolben (3), die in dem Zylinder beweglich sind, um zwei Expansionskammern (5, 4) abzugrenzen und Kompression und zwischen der Karosserie (6) und der Fahrzeugradstummelachse angeordnet, einen hydraulischen Anschlaganschlag (9b), der in der Kompressionskammer (4) montiert ist und einen Zylinder (10b) und einen Kolben (11b) beweglich in Bezug zueinander stehen , **dadurch gekennzeichnet, dass** es umfasst, für jedes Rad, ein Anschlag von einer Expansions kompressiblen mechanischen (16b) und einem Anschlag Rasthydraulik (15b) piston montiert in der Expansionskammer (5), dadurch , dass es umfasst, für jedes Rad , ein komprimierbaren Anschlag mechanischer zwischen dem Zylinder (2) und dem Kasten (6) des Fahrzeugs positionierte Angriff (7b) oder zwischen der Radstummelachse und Karosserie (6) des Fahrzeugs, indem der Kolben (11b) und der Zylinder (10b) des Hydraulikanschlags (9b) relativ zueinander durch bewegt werden sollen durch den Kolben (3) des Stoßdämpfers (1), wenn dieser einen ersten Anschlaghub (CA1) im Zylinder (2) des Stoßdämpfers (1) erreicht, und dadurch den Anschlag Der mechanische Angriff (7b) soll zwischen dem Zylinder (2) des Stoßdämpfers und der Karosserie (6) des Fahrzeugs zusammengedrückt werden oder zwischen der Radstummelachse und der Karosserie (6) des Fahrzeugs, wenn der Kolben (3) des Stoßdämpfers einen zweiten Anschlaghub (CA2) im Zylinder des Stoßdämpfers erreicht, der größer als der erste Hub (CA1) ist.) und dadurch, dass der Kolben des hydraulischen Expansionsstopps (15b) gleichzeitig mit dem Expansionsstopp durch den Kolben (3) des Stoßdämpfers (1) in dem entsprechenden Zylinder (2) bewegt werden soll Die Mechanik (16b) wird durch den Kolben (3) des Stoßdämpfers zusammengedrückt, wenn dieser einen dritten Rückprallhub (CD) im Zylinder (2) des Stoßdämpfers (1) erreicht.

2. Aufhängungssystem nach Anspruch 1, **dadurch gekennzeichnet, dass** der erste Anschlaghub (CA1) des Kolbens (3) des Stoßdämpfers (1) zwischen null und zwanzig Millimeter von einer Referenzlage (AR) liegt des Fahrzeugs.

3. Aufhängungssystem nach Anspruch 1 oder 2, **dadurch gekennzeichnet, dass** der zweite Anschlaghub (CA2) des Kolbens (3) des Stoßdämpfers (1) zwischen vierzig und fünfzig Millimeter von der Bezugslage (AR) des Fahrzeugs.

4. Aufhängungssystem nach einem der Ansprüche 1 bis 3, **dadurch gekennzeichnet, dass** der Zylinder (10b) des Hydraulikanschlags (9b) in die Innenwand des Zylinders (2) des Dämpfers (1) und in integriert ist dass der Kolben (11b) des hydraulischen Angriffsstopps (9b) durch den Kolben (3) des Stoßdämpfers in seinem entsprechenden Zylinder (10b) bewegt werden soll, wenn dieser den ersten Anschlaghub (CA1) erreicht im Stoßdämpferzylinder (2).

5. Aufhängungssystem nach einem der Ansprüche 1 bis 3, **dadurch gekennzeichnet, dass** der Kolben (11b) des Hydraulikanschlags (9b) in die Bodenwand (12) des Zylinders (2) des Stoßdämpfers und integriert ist, dass der Zylinder (10b) des hydraulischen Angriffsanschlags (9b) dazu bestimmt ist, entlang des Kolbens (11b) des hydraulischen Anschlags (9b) durch den Kolben (3) des Stoßdämpfers bewegt zu werden, wenn dieser erreicht den ersten Anschlaghub (CA1) im Zylinder (2) des Stoßdämpfers (1).

6. Aufhängungssystem nach einem der Ansprüche 1 bis 3, **dadurch gekennzeichnet, dass** der Zylinder (10b) des hydraulischen Anschlags (9b) mehrere radiale Löcher (13) aufweist, die durch die Wand des Zylinders (10b) verlaufen und das ermöglichen Eintritt oder Austritt der Flüssigkeit aus der Kompressionskammer des Zylinders (10b) des Stoßdämpfers (1), wenn sich der Kolben (11b) und der Zylinder (10b) des hydraulischen Angriffsstopps (9b) bewegen übereinander.

7. Aufhängungssystem nach einem der Ansprüche 1 bis 3, **dadurch gekennzeichnet, daß** die mechanische Anschlagkante (7b) ist integral mit einem ein Ende (8) des Zylinders (2) des Dämpfers (1) und ist aus elastomerem Material, und dadurch, daß es einen ringförmigen Querschnitt , um so verfahren zu werden durch die Stange (14) des Dämpferkolbens (1), die mit dem Körper (6) des Fahrzeugs aufweist.

8. Aufhängungssystem nach einem der Ansprüche 1 bis 3, 6 und 7, **dadurch gekennzeichnet, dass** es für jedes Rad des Fahrzeugs eine Aufhängungsfeder (17) umfasst, die um den Stoßdämpfer (1) angebracht ist.

9. Aufhängungssystem nach einem der Ansprüche s 1-9, **dadurch gekennzeichnet, dass** die dritte Expansionshub (CD) des Kolbens (3) des Dämpfers (1) zwischen zehn und zwanzig Millimetern von der Fahrzeugreferenzlage (AR).

10. Aufhängungssystem nach einem der Ansprüche 1 bis 9, **dadurch gekennzeichnet, dass** der hydraulische Expansionsstopp ein schwimmender Kolben (15b) ist, der die Stange (14) des Stoßdämpfers (1) umgibt und in der Expansionskammer (5) des Zylinders (2) des Stoßdämpfers zwischen der oberen Endwand (8) des Zylinders (2) des Stoßdämpfers, durch den die Stange (14) des Stoßdämpfers verläuft, und einem Flansch (22), der in den Stange (14) des Stoßdämpfers.

11. Aufhängungssystem nach Anspruch 10, **dadurch gekennzeichnet, dass** der mechanische Relaxationsanschlag (16b) eine in der Relaxationskammer (5) angeordnete Rückstellfeder ist, deren Enden jeweils gegen den Schwimmkolben (15b) und gedrückt sind die obere Endwand (8) des Zylinders (2) des Stoßdämpfers.

12. Fahrzeug, insbesondere Kraftfahrzeug, umfassend ein hydraulisches Aufhängungssystem nach einem der Ansprüche 1 bis 11.

## Claims

1. Hydraulic suspension system of a vehicle, in particular a motor vehicle, comprising for each vehicle wheel a shock absorber (1) with cylinder (2) and piston (3) movable in the cylinder to delimit two expansion chambers (5, 4) respectively and compression and interposed between the body (6) and the vehicle wheel stub axle, a hydraulic attack stop (9b) mounted in the compression chamber (4) and comprising a cylinder (10b) and a piston (11b) movable with respect to one another, **characterized in that** it comprises, for each wheel, a stop of an expansion compressible mechanical (16b) and a stop detent hydraulic (15b) piston mounted in the expansion chamber (5), **in that** it comprises , for each wheel, a compressible mechanical attack stop (7b) positioned between the cylinder (2) and the body (6) of the vehicle or between the wheel stub axle and body (6) of the vehicle, **in that** the piston (11b) and the cylinder (10b) of the hydraulic stop (9b) are intended to be moved relative to each other by through the piston (3) of the shock absorber (1) when the latter reaches a first stroke in attack (CA1) in the cylinder (2) of the shock absorber (1), and **in that** the stop mechanical attack (7b) is intended to be compressed between the cylinder (2) of the shock absorber and the body (6) of the vehicle or between the wheel stub axle and the body (6) of the vehicle when the piston (3) of the shock absorber reaches a second stroke in attack (CA2) in the cylinder of the shock absorber greater than the first stroke (CA1)), and **in that** the piston of the hydraulic expansion stop (15b) is intended to be moved in the corresponding cylinder (2) by the piston (3) of the shock absorber (1) at the same time as the expansion stop mechanical (16b) is compressed by the piston (3) of the shock absorber when the latter reaches a third rebound stroke (CD) in the cylinder (2) of the shock absorber (1).

2. Suspension system according to claim 1, **characterized in that** the first stroke in attack (CA1) of the piston (3) of the shock absorber (1) is between zero and twenty millimeters from a reference attitude (AR) of the vehicle.

3. Suspension system according to claim 1 or 2, **characterized in that** the second stroke in attack (CA2) of the piston (3) of the shock absorber (1) is between forty and fifty millimeters from the reference attitude (AR) of the vehicle.

4. Suspension system according to any one of claims 1 to 3, **characterized in that** the cylinder (10b) of the hydraulic stop (9b) is integral with the internal wall of the cylinder (2) of the damper (1) and **in that** the piston (11b) of the hydraulic attack stop (9b) is intended to be moved in its corresponding cylinder (10b) by the piston (3) of the shock absorber when the latter reaches the first stroke in attack (CA1) in the shock absorber cylinder (2).

5. Suspension system according to any one of claims 1 to 3, **characterized in that** the piston (11b) of the hydraulic stop (9b) is integral with the bottom wall (12) of the cylinder (2) of the shock absorber and **in that** the cylinder (10b) of the hydraulic attack stop (9b) is intended to be moved along the piston (11b) of the hydraulic stop (9b) by the piston (3) of the shock absorber when the latter reaches the first stroke in attack (CA1) in the cylinder (2) of the shock absorber (1).

6. Suspension system according to any one of claims 1 to 3, **characterized in that** the cylinder (10b) of the hydraulic stop (9b) comprises a plurality of radial holes (13) passing through the wall of the cylinder (10b) and allowing the entry or exit of the liquid from the compression chamber of the cylinder (10b) of the shock absorber (1) when the piston (11b) and the cylinder (10b) of the hydraulic attack stop (9b) move one over the other.

7. Suspension system according to any one of claims 1 to 3, **characterized in that** the mechanical abutment edge (7b) is integral with a an end (8) of the cylinder (2) of the damper (1) and is made of elastomeric material, and **in that** it has an annular cross section so as to be crossed by the rod (14) of the piston of the shock absorber (1) connected to the body (6) of the vehicle.

8. Suspension system according to any one of claims 1 to 3, 6 and 7, **characterized in that** it comprises for each wheel of the vehicle a suspension spring (17) mounted around the shock absorber (1).

9. Suspension system according to one of claim s 1-9, **characterized in that** the third expansion stroke (CD) of the piston (3) of the damper (1) is between ten and twenty millimeters from the vehicle reference attitude (AR).

10. Suspension system according to one of claims 1 to 9, **characterized in that** the hydraulic expansion stop is a floating piston (15b) surrounding the rod (14) of the shock absorber (1) and positioned in the expansion chamber (5) of the cylinder (2) of the shock absorber between the upper end wall (8) of the cylinder (2) of the shock absorber through which the rod (14) of the shock absorber passes and a flange (22) integral with the rod (14) of the shock absorber.

11. Suspension system according to claim 10, **characterized in that** the mechanical relaxation stop (16b) is a return spring positioned in the relaxation chamber (5) and the ends of which are respectively pressed against the floating piston (15b) and the upper end wall (8) of the cylinder (2) of the shock absorber.

12. Vehicle, in particular motor vehicle, comprising a hydraulic suspension system according to any one of claims 1 to 11.
